Europäisches Patentamt

**European Patent Office**

**Office européen des brevets**

(11) Veröffentlichungsnummer : **0 125 518**
**B1**

(12)

# EUROPÄISCHE PATENTSCHRIFT

(45) Veröffentlichungstag der Patentschrift :
**11.01.89**

(51) Int. Cl.⁴ : **D 07 B   1/06**

(21) Anmeldenummer : **84104320.1**

(22) Anmeldetag : **17.04.84**

(54) Verstärkungscord zur Verstärkung von elastomeren Erzeugnissen.

(30) Priorität : 16.05.83 DE 3317712

(43) Veröffentlichungstag· der Anmeldung :
**21.11.84 Patentblatt 84/47**

(45) Bekanntmachung des Hinweises auf die Patenterteilung : **11.01.89 Patentblatt 89/02**

(84) Benannte Vertragsstaaten :
**AT BE CH DE FR GB IT LI LU NL SE**

(56) Entgegenhaltungen :
BE--A--  654 921
BE--A--  654 923
FR--A--  698 304
FR--A--  865 538
GB--A-- 1 183 215
US--A-- 2 598 033
US--A-- 3 402 546

(73) Patentinhaber : **Akzo Patente GmbH**
**Postfach 10 01 49 Kasinostrasse 19-23**
**D-5600 Wuppertal-1 (DE)**

(72) Erfinder : **Weidenhaupt, Wolfgang, Dr.**
**Nikolaus-Otto-Strasse 13**
**D-5140 Erkelenz (DE)**
Erfinder : **Wepner, Günther**
**Johannes Strasse 56**
**D-5139 Waldfeucht-Neuhaaren (DE)**
Erfinder : **Dismon, Peter**
**Bendengasse 13**
**D-5138 Heinsberg-Proselen (DE)**

**Beschreibung**

Die Erfindung betrifft einen Verstärkungscord aus mindestens zwei Metalldrähten zur Verstärkung von elastomeren Erzeugnissen.

In der Regel bestehen Verstärkungscorde aus Metalldrähten mit kreisförmigem Querschnitt. Es sind aber auch Verstärkungscorde bekannt, welche aus Metalldrähten mit abgeflachtem Querschnitt bestehen. Beispielsweise wird in der GB-PS 225 477 ein Verstärkungscord der Flachlitzen-Machart beschrieben, bei welchem die Flachheit der Litzen und damit des gesamten Cordes dadurch stärker ausgeprägt wird, daß flache Metalldrähte eingesetzt werden, welche sich an ihren flachen Seiten berühren.

Für Verstärkungscorde sind auch Metalldrähte aus rechteckigem Querschnitt bekannt (US-A 3,402,546). Bei diesen bekannten Verstärkungscorden werden die Metalldrähte einzeln oder aufeinander gedreht, wodurch jeweils Verstärkungscorde entstehen, welche voluminös ausgebildet sind. Innerhalb der Verstärkungscorde ergeben sich Hohlräume, wodurch sich bei mechanischen Verletzungen des in ein elastomeren Materials eingebetteten Cordes infolge Kapillarwirkung korrosive Medien stark ausbreiten können.

Es ist deshalb Aufgabe der vorliegenden Erfindung, einen besonders kompakten Verstärkungscord zur Verfügung zu stellen, der keine durchgehende Kapillare aufweist. Gegenüber den bekannten Verstärkungscorden soll das Kraft-Dehnungsverhalten der erfindungsgemäßen Verstärkungscorde in sehr einfacher Weise auf gewünschte Werte eingestellt werden. Auch soll die Schwankungsbreite des Durchmessers des Verstärkungscordes über seine Länge verringert werden. Die Steifigkeit der Verstärkungscorde soll variiert werden können. Der Querschnitt der Verstärkungscorde soll bei seiner Kompaktheit möglichst deutlich der Kreisform entsprechen.

Diese Aufgabe wird erfindungsgemäß gelöst durch einen Verstärkungscord zur Verstärkung von elastomeren Erzeugnissen aus mindestens zwei Metalldrähten, die einen mindestens annähernd viereckigen Querschnitt, dessen Ecken gerundet sind, aufweisen, welche sich dadurch auszeichnen, daß sich benachbarte Metalldrähte mit der Flachseite berühren und der Verstärkungscord in sich über seine Längsachse verdreht ist.

Es ist von Vorteil, wenn die Einhüllende des Verstärkungscordes einen annähernd rechteckigen Querschnitt aufweist, bei dem das Seitenverhältnis zwischen 2 : 1 und 1 : 1 liegt.

Die Einhüllende des Verstärkungscordes ist als die Hüllkurve um den Querschnitt des Verstärkungscordes zu verstehen, welche die außenliegenden Flächen der den Verstärkungscord bildenden Metalldrähte berührt, und welche zwischen den Berührungsflächen auf der kürzesten Strecke verläuft.

Auf diese Weise wird ein Verstärkungscord zur Verfügung gestellt, der, bezogen auf seinen Gesamtdurchmesser, sehr hohe Festigkeit aufweist. Insofern beansprucht ein solcher Verstärkungscord im elastomeren Erzeugnis, beispielsweise in einem Fahrzeugreifen, bei gleicher Festigkeit weniger Raum. Durch die Verdrehung des Verstärkungscordes in sich über seine Längsachse kann das Kraft-Dehnungsverhalten des Verstärkungscordes günstig beeinflußt werden. Auch ergibt sich ein über die Länge des Verstärkungscordes gleichmäßiger kompakter Querschnitt, wodurch beim Einbetten in das elastomere Material die Gefahr der Berührung benachbarter Verstärkungscorde verringert wird.

Um das Eindringen des elastomeren Materials, welches durch die Verstärkungscorde verstärkt werden soll, zu erleichtern, ist es von Vorteil, wenn die breiteren Seiten des annähernd viereckigen Metalldrahtquerschnitts allenfalls geringfügig ballig und die schmaleren Seiten stark ballig ausgebildet sind.

Der Verstärkungscord zeichnet sich vorteilhafterweise dadurch aus, daß alle Metalldrähte einen mindestens annähernd rechteckigen, gleich breiten Querschnitt aufweisen. Erfindungsgemäße Metalldrähte mit annähernd rechteckigem Querschnitt lassen sich aus runden Metalldrähten durch Flachwalzen oder durch Ziehen mit einem Ziehstein rechteckigen Querschnitts herstellen. Günstig ist es hierbei, wenn beim Flachwalzen oder Ziehen des Metalldrahtmaterials in Breitenrichtung quer zur Laufrichtung auf einem Formzwang verzichtet wird und dieses Metalldrahtmaterial in dieser Richtung frei fließen kann. Auf diese Weise ergibt sich vorteilhaft die gewünschte stark ballige Ausbildung der schmaleren Seiten des Metalldrahtquerschnittes.

Die Metalldrähte, die annähernd rechteckigen Querschnitt aufweisen, können bei demselben Verstärkungscord unterschiedliche Dicke aufweisen. Günstig und wirtschaftlich ist es jedoch, wenn die Metalldrähte etwa gleiche Dicke aufweisen.

Günstig ist es, wenn das Verhältnis von Breite zu Dicke der annähernd rechteckigen Querschnitt aufweisenden Metalldrähte zwischen 4 und 1,5 liegt. Wird bei einem Verstärkungscord ein Metalldraht mit einem Verhältnis von Breite zur Dicke von beispielsweise 1,5 eingesetzt, so müßte ein weiterer dünnerer Metalldraht mit beispielsweise einem Verhältnis von Breite zu Dicke von 3 hinzugefügt werden, um auf einen Verstärkungscord mit annähernd quadratischem Querschnitt zu gelangen.

Die oben beschriebenen Verstärkungscorde lassen sich auf einfache Weise dadurch herstellen, daß die einzelnen Metalldrähte direkt nach dem Walzen oder Ziehen zusammengefaßt und miteinander verzwirnt werden. Die Anzahl der Drehungen pro Meter Verstärkungscord hat Einfluß auf das Kraft-Dehnungs-Verhalten eines solchen Verstärkungscordes.

Die Drehung der zusammengefaßten Einzeldrähte kann beispielsweise auch dadurch bewerkstelligt werden, daß zwischen Walzwerk bzw. Ziehstein und Aufwicklung eine Zwirnvorrichtung angeordnet ist.

Besonders einfach und vor allen Dingen kostengünstig wird die Herstellung eines erfindungsgemäßen Verstärkungscordes, wenn anstelle der durchgehenden S- oder Z-Zwirnbehandlung eine abwechselnd in S- und Z-Richtung alternierende Zwirnbehandlung vorgenommen wird. Auf diese Weise wird ein Verstärkungscord geschaffen, welcher in sich über seine Längsachse alternierend in S- und Z-Richtung verdreht ist.

Bei den erfindungsgemäßen Verstärkungscorden ist es hierbei von Vorteil, die Zwirnung derart durchzuführen, daß der Verstärkungscord zwischen 40 und 200 Drehungen pro Meter aufweist.

Ein Verstärkungscord mit zwei Metalldrähten, bei dem jeder Metalldraht einen mindestens annähernd rechteckigen, gleich breiten Querschnitt aufweist, bei dem die beiden Metalldrähte mit ihren breiteren Seiten übereinander angeordnet sind, und bei dem das Verhältnis von Breite zu Dicke des Querschnitts beider Metalldrähte bei 2 liegt, hat sich besonders bewährt.

In der Regel werden zur Bildung eines Verstärkungscordes, zwei, drei oder vier Metalldrähte eingesetzt. Der Einsatz von mehr als vier Metalldrähten ist ebenfalls möglich, wobei die obere Grenze der Anzahl der Metalldrähte durch die bei Verstärkungscorden gewünschte Steifigkeit gegeben ist. Je mehr Metalldrähte zur Bildung eines Verstärkungscordes eingesetzt werden, desto geringer wird die Steifigkeit dieses Verstärkungscordes.

Bei erforderlicher höherer Belastbarkeit des Verstärkungscordes, beispielsweise beim Verstärken von LKW-Reifen, können zwei oder mehr Verstärkungscorde zu einem Verstärkungsseil zusammengesetzt werden.

Die oben beschriebenen Verstärkungscorde fallen unter die Gruppe der einfach verseilten Verstärkungscorde. Diese einfach verseilten Verstärkungscorde lassen sich auch als Litzen für eine zweite Verseilung einsetzen. Hierbei bleiben die oben beschriebenen Vorteile der einfach verseilten Verstärkungscorde erhalten. Das Gebilde, welches durch Zusammenfassen oder nochmaliges Verseilen der oben beschriebenen Verstärkungscorde entsteht, wird hier Verstärkungsseil genannt, um Verwechslungen auszuschließen.

Ein solches Verstärkungsseil kann entweder ganz aus den erfindungsgemäßen Verstärkungscorden aufgebaut sein oder diese nur im Kern enthalten. Im letzteren Fall werden ein oder mehrere Verstärkungscorde als Kernlitze(n) eingesetzt, um welche Kernlitze(n) mehrere Einzeldrähte geschlagen sind.

Besonders günstig ist es, wenn die Anzahl der um die Kernlitze(n) geschlagenen Einzeldrähte größer ist als die Anzahl der die Kernlitze(n) bildenden Metalldrähte, welche annähernd viereckigen Querschnitt aufweisen.

Besonders geeignet ist ein Verstärkungsseil, welches einen Verstärkungscord aus zwei Metalldrähten mit annähernd rechteckigem Querschnitt (Breite zu Dicke etwa gleich 2) als Kernlitze aufweist, um welche Kernlitze acht Einzeldrähte geschlagen sind. Diese Einzeldrähte weisen bevorzugt eine Schlaglänge von 10 bis 20 mm auf.

Ein solches Verstärkungsseil kann wendelförmig mit einem oder mehreren Umschlingungsdrähten umwickelt sein. Diese wendelförmig umwickelten Umschlingsdrähte können abgeflachten Querschnitt aufweisen. Auf diese Weise wird gegenüber runden Umschlingungsdrähten der Durchmesser des Verstärkungsseiles verringert. Gleichzeitig wird die Gefahr der Reibkorrosion zwischen Umschlingungsdraht und den tragenden Metalldrähten im fertigen elastomeren Erzeugnis verringert.

Die Gefahr der Reibkorrosion ist immer dann gegeben, wenn zwei Metalloberflächen berührenden Kontakt haben, wobei diese beiden Metalloberflächen unter Belastung einer geringfügigen gegenseitigen Verschiebung unterworfen sind. Ein solcher Zustand tritt zwischen den Metalldrähten des Verstärkungscordes, welche im elastomeren Erzeugnis die Belastung aufnehmen, und den Umschlingungsdrähten ein.

Die erfindungsgemäßen Verstärkungscorde und Verstärkungsseile finden bevorzugte Verwendung bei der Herstellung von Fahrzeugluftreifen, Schläuchen, Förderbändern oder Treibriemen. Sie eignen sich hervorragend im Gürtel von PKW-Luftreifen. Die erfindungsgemäßen Verstärkungsseile lassen sich außerdem besonders günstig zur Herstellung von Luftreifen für Lastkraftwagen, Erdbewegungsmaschinen oder Traktoren, insbesondere im Gürtel verwenden.

In der Regel bestehen die Metalldrähte auch für erfindungsgemäße Verstärkungscorde aus einem Kohlenstoff-legierten Stahldraht. Ganz besonders eignen sich Metalldrähte mit 0,6 bis 0,9 Gew.-% C, welche als gezogene Runddrähte eine Zugfestigkeit von 2 500 bis 3 500 N/mm$^2$ aufweisen. Die Stahldrähte müssen eine gute Bindung mit dem elastomeren Material eingehen. Deshalb werden die Stahldrähte mit einem zweiten Material, Kunststoff oder einem anderen Material beschichtet, wobei zwischen Stahldraht und Beschichtungswerkstoff einerseits und Beschichtungswerkstoff und elastomerem Material andererseits gute Bindungsneigung vorhanden sein muß. Mit Messing beschichtete Stahldrähte finden bevorzugt Anwendung.

Die Erfindung wird anhand der nachstehenden Beispiele und Figuren näher erläutert.

Es zeigen :

Figur 1 zwei an sich bekannte und einen erfindungsgemäßen Verstärkungscord in jeweils vier Querschnitten,

Figur 2 einen Querschnitt eines erfindungsgemäßen Verstärkungscordes mit drei Metalldrähten,

Figur 3 das Kraft-Dehnungs-Verhalten dreier erfindungsgemäßer Verstärkungscorde,

Figur 4 das Kraft-Dehnungs-Verhalten dreier an sich bekannter Verstärkungscorde,

Figur 5 schematisch den Versuchsaufbau bei der Bestimmung der Luftdurchlässigkeit eines eingebetteten Verstärkungsseiles,

Figur 6 einen Schnitt durch den Prüfkörper, welcher bei der Bestimmung der Luftdurchlässigkeit eingesetzt wird,

Figur 7 den Querschnitt eines zweilagigen erfindungsgemäßen Verstärkungsseiles.

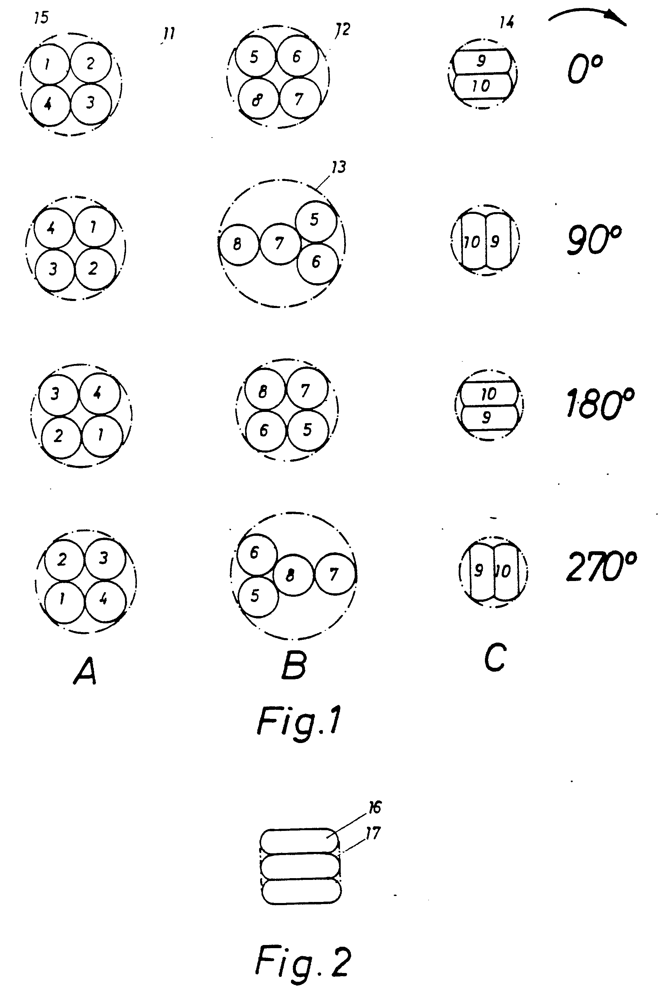

Fig. 1 zeigt drei verschiedene Corde A, B und C, von denen A und B bekannte und C eine erfindungsgemäßer Verstärkungscord ist. Cord A besteht aus vier Drähten 1, 2, 3, 4 mit kreisförmigem Querschnitt, die umeinander geschlagen bzw. miteinander verzwirnt sind. Cord B besteht ebenfalls aus vier Drähten 5, 6, 7, 8, mit kreisförmigem Querschnitt, bei dem die Drähte 7, 8 parallel verlaufende und sich linienförmig berührende Kerndrähte sind, die von den ebenfalls zueinander parallel liegenden Umwicklungsdrähten 5, 6 schraubenlinienförmig umgeben sind. Der hier beispielsweise dargestellte erfindungsgemäße Verstärkungscord C besteht aus zwei, rechteckigen Querschnitt aufweisenden Drähten 9, 10 mit einem Verhältnis von Breite zu Dicke von 2 : 1, wobei der Verstärkungscord in sich über seine Längsachse verdreht ist.

Für die drei Corde A, B, C sind in Fig. 1 Schnitte senkrecht zur Seilachse nach den charakteristischen Verdrehungswinkeln 0°, 90°, 180° und 270° dargestellt, wobei die gewählte Drehrichtung mit der des Pfeiles übereinstimmt.

Wie aus Fig. 1 hervorgeht, weist das bekannte Seil A einen konstanten Umkreis 11 unabhängig von der Seilschnittebene senkrecht zur Seilachse auf, der jedoch größer als der Umkreis 14 des erfindungsgemäßen Verstärkungscordes C ist. Auch erkennt man deutlich bei Cord A eine zwischen den vier Drähten 1, 2, 3 und 4 befindliche in Längsachse des Cordes A durchgehende Kapillare 15, in die kein Gummi eindringen kann, wodurch sich bei mechanischen Verletzungen des in ein elastomeres Material eingebetteten Cordes infolge Kapillarwirkung korrosive Medien so stark ausbreiten können, daß eine Lagentrennung eintritt.

Bei dem erfindungsgemäßen Verstärkungscord C ist die Bildung einer Kapillare überhaupt nicht möglich, so daß oben beschriebene, korrosionsbedingte Schädigungen nicht auftreten können.

In dem bekannten Verstärkungscord B wechseln die Drähte 5 und 6 ständig ihre Lage gegenüber den Kerndrähten 7 und 8, so daß auch hier sich keine durchgehende Kapillare bildet und infolgedessen die Korrosionsausbreitung im eingebetteten Zustand ausgeschlossen ist. Nachteilig ist jedoch ein ständig in seiner Abmessung in Längsrichtung sich verändernder Umkreis 12 bzw. 13, der unabhängig von der Lage der Drähte 5, 6, 7 und 8 auch im günstigsten Falle eine größere Abmessung aufweist als der Umkreis 14 des erfindungsgemäßen Verstärkungscordes C. Im eingebetteten Zustand ist insofern die Gefahr der Berührung benachbarter Lagen beim bekannten Verstärkungscord B erheblich größer als beim erfindungsgemäßen Verstärkungscord C. Insofern ist es beim Einsatz der erfindungsgemäßen Verstärkungscorde C möglich, den Abstand zwischen den Einzelcorden beim Einbetten zu verkleinern, und somit höhere Festigkeit in derselben Querschnittsfläche des elastomeren Erzeugnisses zu erreichen.

Darüber hinaus ist es beim Einbetten von Verstärkungscorden in das elastomere Material von Bedeutung, daß innerhalb des Seilverbandes alle Drähte möglichst gleiche Länge aufweisen, um ebene Bahnen des Verbundkörpers zu erreichen. Bei den bekannten Verstärkungscorden A und B ist dieser Zustand sehr stark abhängig von den Spannungen, die beim Verseilen auf den Einzeldraht wirken. Der erfindungsgemäße Verstärkungscord C verhält sich hierbei wesentlich vorteilhafter.

Fig. 2 zeigt einen erfindungsgemäßen Verstärkungscord, bestehend aus drei Drähten 16 mit annähernd rechteckigem Querschnitt, dessen Einhüllende 17 einen annähernd quadratischen Querschnitt aufweist. Das Verhältnis von Breite zu Dicke der Einzeldrähte 16 ist hierbei 3.

## Beispiel 1

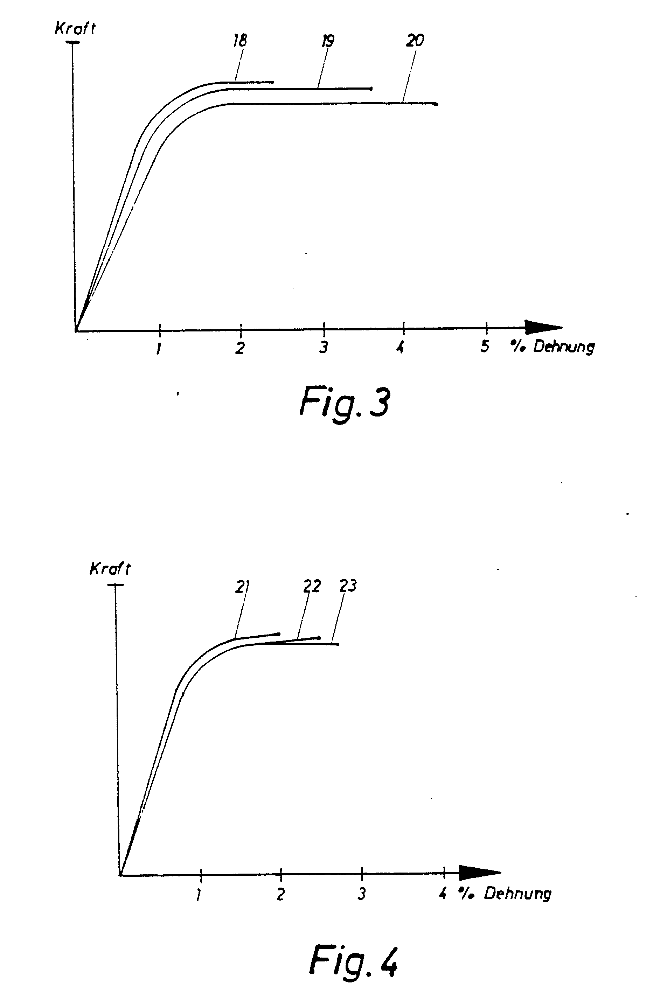

In Fig. 3 ist das Kraft-Dehnungs-Verhalten eines erfindungsgemäßen Verstärkungscordes, bestehend aus zwei rechteckigen Querschnitt aufweisenden Stahldrähten gleicher Dicke in Abhängigkeit der auf den Verstärkungscord aufgebrachten Drehungen aufgezeigt. Die Ergebnisse sind in der nachfolgenden Tabelle I enthalten.

In Fig. 4 ist das Kraft-Dehnungs-Verhalten eines bekannten Verstärkungscordes, bestehend aus zwei kreisförmigen Querschnitt aufweisenden Stahldrähten in Abhängigkeit der auf diesen Verstärkungscord aufgebrachten Drehungen aufgezeigt. Auch diese Ergebnisse sind in der nachfolgenden Tabelle enthalten.

Die effektive Querschnittsfläche der erfindungsgemäßen Verstärkungscorde 18, 19, 20 entsprach der der bekannten Corde 21, 22, 23.

(Siehe Tabelle I Seite 5 f.)

# EP 0 125 518 B1

Tabelle I

| Cord Nr. | Draht-querschnitt | Drehungen pro Meter | Dehnung bei $K_{max}$ | $K_{max}$ % |
|---|---|---|---|---|
| 18 | B : H = 2 | 0 | 2,4 | 100 |
| 19 | B : H = 2 | 70 | 3,6 | 97 |
| 20 | B : H = 2 | 100 | 4,4 | 96 |
| 21 | kreisf. | 0 | 2,0 | 100 |
| 22 | kreisf. | 70 | 2,5 | 97 |
| 23 | kreisf. | 100 | 2,7 | 96 |

Wie aus den Fig. 3 und 4 hervorgeht, läßt sich das Dehnungsverhalten der erfindungsgemäßen Verstärkungscorde gegenüber den bekannten Corden, deren Drähte runden Querschnitt besitzen deutlich erhöhen, wobei sich die maximal mögliche Zugbelastung bei beiden Corden vergleichbar geringfügig verringert.

Beispiel 2

Im nachfolgenden Beispiel 2 werden zwei zum Vergleich herangezogene, im Handel erhältliche Verstärkungscorde mit einem erfindungsgemäßen Verstärkungscord verglichen. Bei dem Vergleichscord 24 handelt es sich um einen Cord des Aufbaus gemäß Cord A in Figur 1, während der Vergleichscord 25 wie Cord B in Figur 1 aufgebaut ist. Der erfindungsgemäße Verstärkungscord 26 besteht aus zwei Stahldrähten, welche ànnähernd rechteckigen Querschnitt, dessen Kanten gerundet sind, aufweisen, welche durch Flachwalzen von runden Drähten mit 0,36 mm Durchmesser auf eine Dicke von 0,25 mm entstandeh sind, wobei die runden und die flachgewalzten Drähte annähernd gleichen Querschnitt aufweisen. Aufbau und Eigenschaften der beiden Vergleichscorde 24 und 25 und des erfindungsgemäßen Verstärkungscordes 26 sind in Tabelle II enthalten.

Tabelle II

| | | Vergleichs-cord 24 | Vergleichs-cord 25 | erfindungsgemäßer Verstärkungscord 26 |
|---|---|---|---|---|
| Konstruktions-bezeichnung | | 4 x 0,25 | 2+2 x 0,25 | 2 x 0,36 F |
| Schlaglänge | mm | 12,5 | 14 | 16 |
| Reißkraft | N | 520 | 520 | 523 |
| m-Gewicht | ktex | 1,59 | 1,58 | 1,59 |
| Bruchdehnung | % | 1,87 | 1,79 | 2,55 |

5

Tabelle II  (Fortsetzung)

|  |  | Vergleichs-cord 24 | Vergleichs-cord 25 | erfindungsgemäßer Verstärkungscord 26 |
|---|---|---|---|---|
| durchschnitt-licher Cord-durchmesser | mm | 0,6 | 0,66 | 0,57 |
| Biegesteifig-keit | SU | 23 | 23 | 36 |
| Luftdurchlässig-keit im vulkani-sierten Zustand | ml/min | 43 | 0 | 0 |

Die Biegefestigkeit wurde in der Weise bestimmt, wie sie in BISFA, « Internationally agreed methods for testing stell byre cords » 1981, Chapter H., Determination of stiffness, beschrieben wird.

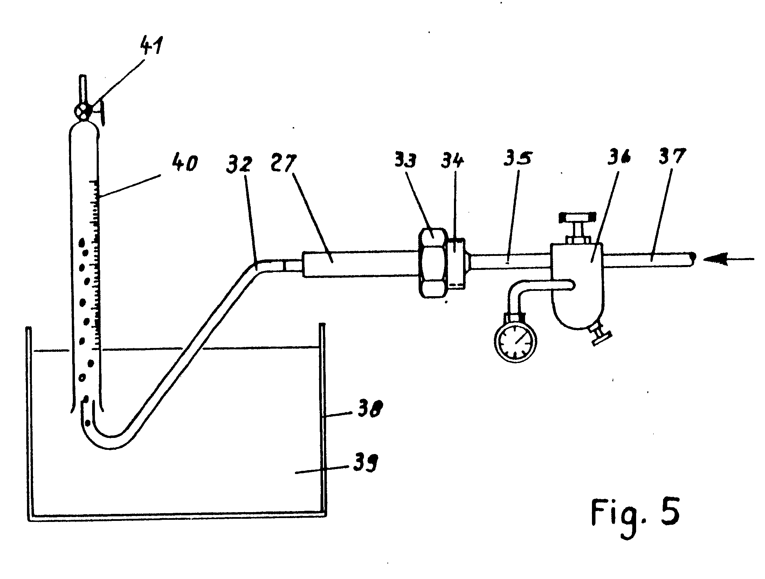

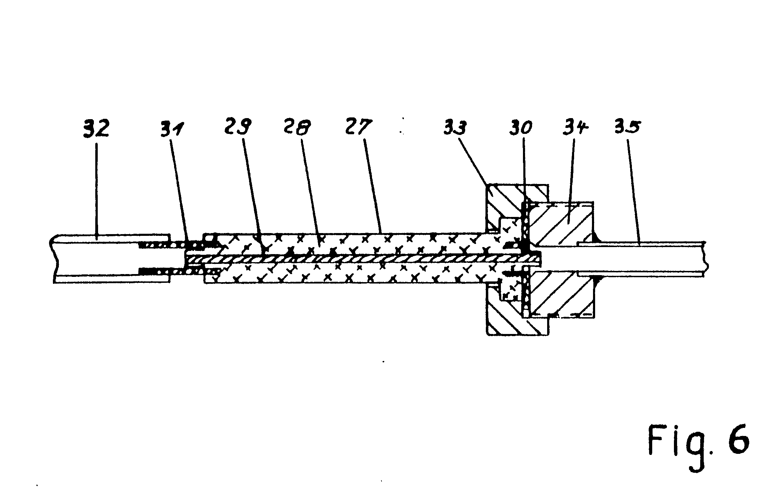

Die Luftdurchlässigkeit im vulkanisierten Zustand gibt Auskunft über die Güte der Einbettung eines Verstärkungscordes im Gummi. Sie wurde bestimmt mit Hilfe eines Versuchsaufbaus gemäß Figur 5, wobei ein Prüfkörper gemäß Figur 6 Verwendung fand.

Zu diesem Zweck wird ein 7,5 cm langes Stück eines Verstärkungscordes 29 in Gummi 28 eingebettet, wobei der Verstärkungscord 29 an beiden Stirnseiten des Prüfkörpers 27 sichtbar ist. Gleichzeitig werden in jeden Prüfkörper 27 eine Dichtungsscheibe 30 und ein Rohranschlagstück 31 in den Gummi 28 eingebettet.

Mit der Überwurfmutter 33 wird der Prüfkörper 27 gasdicht mit einem Druckluftanschlußstück 34 angeschlossen. Das Druckluftanschlußstück 34 ist über ein Übergangsstück 35, ein Druckreduzierventil 36 und einer Druckluftleitung 37 an eine (nicht dargestellte) Druckluftquelle angeschlossen.

Am Rohranschlußstück 31 ist ein Rohr 32 gasdicht angeschlossen, welches mit dem freien Ende in eine mit Wasser 39 gefüllte Wanne 38 eingetaucht ist. Das freie Ende ist nach oben gebogen und befindet sich unter der Öffnung eines bei Beginn des Versuches bis zur Nullmarke mit Wasser gefüllten Meßzylinders 40, welcher ebenfalls in das Wasserbad 38, 39 eingetaucht ist. Mit dem Ventil 41 läßt sich die Höhe der Wassersäule im Meßzylinder 40 einstellen.

Bei Beginn der Luftdurchlässigkeitsbestimmung wird über das Druckreduzierventil 36 ein Druck von 1 bar eingestellt. Kann durch den Prüfkörper infolge einer nicht vollständigen Einbettung des Verstärkungscordes 29 in die Gummimasse 28 Luft eindringen, so steigen die entstehenden Luftblasen im Meßzylinder 40 auf. Gemessen wird die sich im Meßzylinder 40 ansammelnde Luftmenge pro Zeiteinheit.

Wie aus Tabelle II ersichtlich, ist der erfindungsgemäße Verstärkungscord 26 gegenüber den bisher bekannten Vergleichscorden 24 und 25 deutlich kompakter. Als Maß für die Kompaktheit wurde in Tabelle II der durchschnittliche Corddurchmesser angegeben. Der Vergleichscord 25 weist teilweise einen wesentlich größeren Umreis auf (siehe Cord B, Figur 1, Umkreis 13).

Die Einbettung eines erfindungsgemäßen Verstärkungscordes in das elastomere Erzeugnis (Gummi) läßt sich hervorragend bewerkstelligen, wie sich aus den Werten der Luftdurchlässigkeit im vulkanischen Zustand ergibt. Die gleichen Werte lassen sich auch mit dem Vergleichscord 25 mit allerdings wesentlich größerem, sehr stark schwankenden Corddurchmesser erreichen.

Die Biegesteifigkeit des erfindungsgemäßen Verstärkungscordes 26 ist größer als die der Vergleichs-scorde 24 und 25, weshalb der erfindungsgemäße Verstärkungscord auch besser für den Einsatz im Gürtel von Fahrzeug-Luftreifen geeignet ist.

Um vergleichbare Verstärkungscorde in Tabelle II gegenüber stellen zu können, wurden die Vergleichscorde 24 und 25 und der erfindungsgemäße Verstärkungscord 26 derart ausgesucht, daß alle drei Corde eine Reißkraft von ca. 520 N aufwiesen.

Wie sich ebenfalls aus Tabelle II ergibt, weist der erfindungsgemäße Verstärkungscord 26 bei vergleichbarer Reißkraft eine deutlich erhöhte Bruchdehnung gegenüber den Vergleichscorden 24 und 25 auf.


Beispiel 3

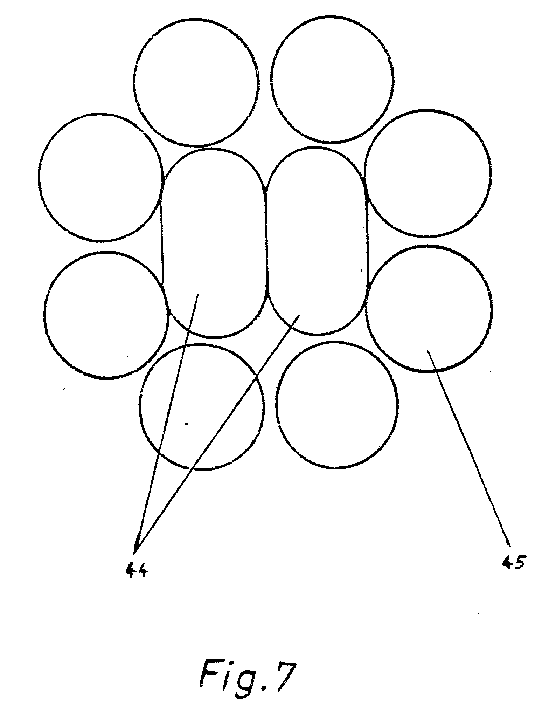

In Beispiel 3 werden ein zweilagiges erfindungsgemäßes Verstärkungsseil 42, bei dem, wie in Figur 7 dargestellt, im Kern zwei rechteckigen Querschnitt aufweisende, miteinander verdrehte Stahldrähte 44

# EP 0 125 518 B1

angeordnet sind, um welchen Kern acht runde Drähte 45 geschlagen sind, und ein Vergleichsseil 43 mit drei runden Einzeldrähten als Kern und sechs um den Kern geschlagenen, runden Einzeldrähten miteinander vergleichen. Aufbau und Eingenschaften des erfindungsgemäßen Verstärkungsseiles 42 sowie des Vergleichsseiles 43 sind in Tabelle III aufgeführt.

Tabelle III

| | | erfindungsgemäßes Verstärkungsseil 42 | Vergleichsseil 43 |
|---|---|---|---|
| Konstruktions- bezeichnung | | 2 x 0,38 F + 8 x 0,30 | 3 x 0,20 + 6 x 0,38 |
| Schlaglänge | mm | 16/16 | 10/18 |
| Reißkraft | N | 1762 | 1700 |
| m-Gewicht | ktex | 6,13 | 6,14 |
| Bruchdehnung | % | 2,31 | 2,00 |
| durchschnitt- licher Cord- durchmesser | mm | 1,16 | 1,18 |
| Biegesteifigkeit | SU | 161 | 170 |
| Luftdurchlässig- keit im vulkani- sierten Zustand | ml/min | 0 | 25 |

Hierbei bedeutet « 0,38 F », daß ein runder Stahldraht mit 0,38 mm Durchmesser auf 0,255 mm Dicke flachgewalzt wurde, wobei die Querschnittsfläche jedoch annähernd gleich blieb.

Wie aus Tabelle III ersichtlich, weist das erfindungsgemäße Verstärkungsseil 42 einen geringfügig geringeren Durchmesser bei gleichzeitig höherer Reißkraft gegenüber dem Vergleichsseil 43 auf. Als Maß der Kompaktheit der beiden Seile kann jedoch hier die auf den durchschnittlichen Durchmesser bezogene Reißkraft bestimmt werden (erfindungsgemäßes Verstärkungsseil 42 : 1762 N : 1,16 mm = 1519 N/mm gegenüber Vergleichsseil 43 : 1700 N : 1,18 mm = 1441 N/mm), wodurch erkennbar wird, daß das erfindungsgemäße Verstärkungsseil 42 deutlich kompakter ausgebildet ist als das Vergleichsseil 43.

Die Biegefestigkeit und die Luftdurchlässigkeit im vulkanisierten Zustand wurden wie bei Beispiel 2 bestimmt. Die Biegefestigkeit des erfindungsgemäßen Verstärkungsseiles 42 liegt geringfügig höher als die des Vergleichsseiles 43, während das erfindungsgemäße Verstärkungsseil 42 hervorragend in das elastomere Material (Gummi) eingebettet ist, wie der Luftdurchlässigkeitstest beweist.

## Patentansprüche

1. Verstärkungscord zur Verstärkung von elastomeren Erzeugnissen aus mindestens zwei Metalldrähten, die einen mindestens annähernd rechteckigen Querschnitt, dessen Ecken gerundet sind, aufweisen, dadurch gekennzeichnet, daß sich benachbarte Metalldrähte mit der Flachseite berühren und der Verstärkungscord in sich über seine Längsachse verdreht ist.

2. Verstärkungscord nach Anspruch 1, dadurch gekennzeichnet, daß die Einhüllende des Verstärkungscordes einen annähernd rechteckigen Querschnitt aufweist, bei dem das Seitenverhältnis zwischen 2 : 1 und 1 : 1 liegt.

7

3. Verstärkungscord nach Anspruch 1 oder 2, dadurch gekennzeichnet, daß die breiteren Seiten des annähernd rechteckigen Metalldrahtquerschnitts allenfalls geringfügig ballig und die schmaleren Seiten stark ballig ausgebildet sind.

4. Verstärkungscord nach einem oder mehreren der Ansprüche 1 bis 3, dadurch gekennzeichnet, daß alle Metalldrähte einen mindestens annähernd rechteckigen gleich breiten Querschnitt aufweisen, und mit ihren breiteren Seiten derart übereinander angeordnet sind, daß die Summe ihrer Einzeldicken gleich ihrer Breite ist.

5. Verstärkungscord nach Anspruch 4, dadurch gekennzeichnet, daß der Querschnitt jedes Metalldrahtes etwa gleiche Dicke aufweist.

6. Verstärkungscord nach Anspruch 4 oder 5, dadurch gekennzeichnet, daß das Verhältnis von Breite zu Dicke der annähernd rechteckigen Querschnitt aufweisenden Metalldrähte zwischen 4 und 1,5 liegt.

7. Verstärkungscord nach einem oder mehreren der Ansprüche 1 bis 6, dadurch gekennzeichnet, daß der Verstärkungscord in sich durchgehend über seine Länge in S- oder Z-Richtung verdreht ist.

8. Verstärkungscord nach einem oder mehreren der Ansprüche 1 bis 6, dadurch gekennzeichnet, daß der Verstärkungscord in sich über seine Längsachse alternierend in S- und Z-Richtung verdreht ist.

9. Verstärkungscord nach einem oder mehreren der Ansprüche 1 bis 8, dadurch gekennzeichnet, daß der Verstärkungscord zwischen 40 und 200 Drehungen pro Meter aufweist.

10. Verstärkungscord nach einem oder mehreren der Ansprüche 5 bis 9 mit zwei Metalldrähten, dadurch gekennzeichnet, daß jeder Metalldraht einen mindestens annähernd rechteckigen, gleich breiten Querschnitt aufweist, daß die beiden Metalldrähte mit ihren breiteren Seiten übereinander angeordnet sind, und daß das Verhältnis von Breite zu Dicke des Querschnitts beider Metalldrähte bei 2 liegt.

11. Verstärkungsseil bestehend aus zwei oder mehr Verstärkungscorden nach einem oder mehreren der Ansprüche 1 bis 10.

12. Verstärkungsseil nach Anspruch 12, bestehend aus zwei oder mehr miteinander verseilten Verstärkungscorden nach einem oder mehreren der Ansprüche 1 bis 10.

13. Verstärkungsseil mit einem Verstärkungscord nach einem oder mehreren der Ansprüche 1 bis 10 als Kernlitze um welche Kernlitze mehrere Einzeldrähte (4, 5) geschlagen sind.

14. Verstärkungsseil mit mehreren Verstärkungscorden nach einem oder mehreren der Ansprüche 1 bis 10 als Kernlitzen, um welche mehrere Einzeldrähte geschlagen sind.

15. Verstärkungsseil nach Anspruch 13 oder 14, dadurch gekennzeichnet, daß die Anzahl der um die Kernlitze(n) geschlagenen Einzeldrähte größer ist als die Anzahl der Metalldrähte mit annähernd viereckigem Querschnitt der Kernlitze(n).

16. Verstärkungsseil mit einem Verstärkungscord nach Anspruch 10 als Kernlitze, um welche Kernlitze acht Einzeldrähte (45) geschlagen sind.

17. Verstärkungsseil nach Anspruch 16, bei welchem die Einzeldrähte mit einer Schlaglänge von 10 bis 20 mm und die Kernlitze geschlagen sind.

18. Verstärkungsseil nach einem oder mehreren der Ansprüche 11 bis 17 wendelförmig umwickelt mit einem oder mehreren Umschlingungsdrähten.

19. Verstärkungsseil nach Anspruch 18, dadurch gekennzeichnet, daß die Umschlingungsdrähte einen abgeflachten Querschnitt aufweisen.

20. Verwendung der Verstärkungscorde gemäß einem oder mehreren der Ansprüche 1 bis 10 zur Herstellung von Fahrzeugluftreifen, Schläuchen, Förderbändern oder Treibriemen.

21. Verwendung der Verstärkungscorde gemäß einem oder mehreren der Ansprüche 1 bis 10 im Gürtel von PKW-Luftreifen.

22. Verwendung der Verstärkungsseile gemäß einem oder mehreren der Ansprüche 11 bis 19 zur Herstellung von Luftreifen für Lastkraftwagen, Erdbewegungsmaschinen oder Traktoren.

23. Verwendung der Verstärkungscorde gemäß einem oder mehreren der Ansprüche 11 bis 19 im Gürtel von Luftreifen für Lastkraftwagen, Erdbewegungsmaschinen oder Traktoren.

24. Luftreifen, dadurch gekennzeichnet, daß er Verstärkungscorde gemäß einem oder mehreren der Ansprüche 1 bis 10 und/oder Verstärkungsseile nach einem oder mehreren der Ansprüche 11 bis 19 enthält.

## Claims

1. Reinforcing cord for reinforcing elastomeric products, composed of at least two metal wires which are at least approximately rectangular in cross-section with rounded edges, characterised in that adjacent metal wires are in contact along their flat side and the reinforcing cord is twisted about its longitudinal axis.

2. Reinforcing cord according to claim 1, characterised in that the envelope of the reinforcing cord is approximately rectangular in cross-section with a ratio of sides of from 2 : 1 to 1 : 1.

3. Reinforcing cord according to claim 1 or 2, characterised in that the broader sides of the approximately rectangular cross-section of the metal wire may be slightly convex and the narrower sides are strongly convex.

EP 0 125 518 B1

4. Reinforcing cord according to one or more of claims 1 to 3, characterised in that all metal wires have an approximately rectangular cross-section of the same width and are arranged with their broad sides above one another so that the sum of their individual thicknesses is equal to their width.

5. Reinforcing cord according to claim 4, characterised in that all the metal wires have approximately the same thickness in cross-section.

6. Reinforcing cord according to claim 4 or 5, characterised in that the ratio of width to thickness of the metal wires which are approximately rectangular in cross-section has a value from 4 to 1.5.

7. Reinforcing cord according to one or more of claims 1 to 6, characterised in that the reinforcing cord is twisted clockwise or anticlockwise over its whole length.

8. Reinforcing cord according to one or more of claims 1 to 6, characterised in that the reinforcing cord is twisted alternately in the clockwise and the anticlockwise direction over its longitudinal axis.

9. Reinforing cord according to one or more of claims 1 to 8, characterised in that the reinforcing cord has from 40 to 200 turns per metre.

10. Reinforcing cord according to one or more of claims 5 to 9 comprising two metal wires, characterised in that each metal wire has the same width in cross-section and is at least approximately rectangular in cross-section, in that the two metal wires are arranged with their broader sides above one another and in that the ratio of width to thickness of the cross-section of each of the two metal wires is 2.

11. Reinforcing cable consisting of two or more reinforcing cords according to one or more of claims 1 to 10.

12. Reinforcing cable according to claim 12 consisting of two or more reinforcing cords stranded together according to one or more of claims 1 to 10.

13. Reinforcing cable having a reinforcing cord according to one or more of claims 1 to 10 as core strand about which are laid several individual wires (4, 5).

14. Reinforcing cable having several reinforcing cords according to one or more of claims 1 to 10 as core strands about which are laid several individual wires.

15. Reinforcing cable according to claim 13 or 14, characterised in that the number of individual wires laid round the core strand(s) is greater than the number of the metal wires with approximately rectangular cross-section of the core strand(s).

16. Reinforcing cable having a reinforcing cord according to claim 10 as core strand about which are laid eight individual wires (45).

17. Reinforcing cable according to claim 16, in which the individual wires are laid round the core strand with a length of lay of from 10 to 20 mm.

18. Reinforcing cable according to one or more of claims 11 to 17 having one or more covering wires wrapped round it in a spiral.

19. Reinforcing cable according to claim 18, characterised in that the covering wires have a flattened cross-section.

20. Use of the reinforcing cords according to one or more of claims 1 to 10 for the manufacture of motor vehicle tyres, hoses, conveyor belts or drive belts.

21. Use of the reinforcing cords according to one or more of claims 1 to 10 in the belt of passenger car pneumatic tyres.

22. Use of the reinforcing cables according to one or more of claims 11 to 19 for the manufacture of pneumatic tyres for heavy goods vehicles, earth/moving machinery or tractors.

23. Use of the reinforcing cords according to one or more of claims 11 to 19 in the belt of pneumatic tyres for heavy goods vehicles, earth moving machinery or tractors.

24. Pneumatic tyre, characterised in that it contains reinforcing cords according to one or more of claims 1 to 10 and/or reinforcing cables according to one or more of claims 11 to 19.

**Revendications**

1. Cordon de renforcement pour renforcer des produits en élastomère, constitué d'au moins deux fils métalliques qui présentent une section droite au moins approximativement rectangulaire dont les angles sont arrondis, caractérisé par le fait que des fils métalliques voisins se touchent par leur côté plat et que le cordon de renforcement est tordu sur son axe longitudinal.

2. Cordon de renforcement selon la revendication 1, caractérisé par le fait que l'enveloppe du cordon de renforcement présente une section approximativement rectangulaire dont le rapport des côtés est compris entre 2 : 1 et 1 : 1.

3. Cordon de renforcement selon les revendications 1 ou 2, caractérisé par le fait que les plus grands côtés de la section droite approximativement rectangulaire du fil métallique sont éventuellement légèrement bombés, tandis que les côtés les plus étroits sont fortement bombés.

4. Cordon de renforcement selon une ou plusieurs des revendications 1 à 3, caractérisé par le fait que tous les fils métalliques présentent une section droite au moins approximativement rectangulaire, de même largeur, et sont agencés les uns sur les autres par leurs côtés les plus larges, de manière que la somme de leurs épaisseurs individuelles soit égale à leur largeur.

5. Cordon de renforcement selon la revendication 4, caractérisé par le fait que la section droite de chaque fil métallique présente sensiblement la même largeur.

9

6. Cordon de renforcement selon la revendication 4 ou 5, caractérisé par le fait que le rapport de la largeur à l'épaisseur des fils métalliques présentant une section droite approximativement rectangulaire est compris entre 4 et 1,5.

7. Cordon de renforcement selon une ou plusieurs des revendications 1 à 6, caractérisé par le fait que le cordon de renforcement est tordu de manière ininterrompue, sur toute sa longueur, dans le sens correspondant à une torsion S ou Z.

8. Cordon de renforcement selon une ou plusieurs des revendications 1 à 6, caractérisé par le fait que le cordon de renforcement est tordu, sur l'étendue de son axe longitudinal, alternativement dans le sens d'une torsion S et dans le sens d'une torsion Z.

9. Cordon de renforcement selon une ou plusieurs des revendications 1 à 8, caractérisé par le fait que le cordon de renforcement présente entre 40 et 200 torsions par mètre.

10. Cordon de renforcement selon une ou plusieurs des revendications 5 à 9, avec deux fils métalliques, caractérisé par le fait que chaque fil métallique présente une section droite approximativement rectangulaire, de même largeur, par le fait que les deux fils métalliques sont agencés l'un sur l'autre par leurs côtés les plus larges, et par le fait que le rapport de la largeur à l'épaisseur de la section des deux fils métalliques est d'environ 2.

11. Câble de renforcement constitué de deux ou plusieurs cordons de renforcement selon une ou plusieurs des revendications 1 à 10.

12. Câble de renforcement selon la revendication 12, constitué d'au moins deux cordons de renforcement selon une ou plusieurs des revendications 1 à 10, ces cordons étant assemblés par câblage.

13. Câble de renforcement avec un cordon de renforcement selon une ou plusieurs des revendications 1 à 10, constituant un toron-âme autour duquel plusieurs fils individuels sont commis.

14. Câble de renforcement avec plusieurs cordons de renforcement selon une ou plusieurs des revendications 1 à 10, constituant des torons-âmes autour desquels plusieurs fils individuels sont enroulés.

15. Câble de renforcement selon la revendication 13 ou 14, caractérisé par le fait que le nombre des fils individuels commis autour du ou des torons-âmes est plus grand que le nombre des fils métalliques à section droite approximativement rectangulaire du ou des torons-âmes.

16. Câble de renforcement avec un cordon de renforcement selon revendication 10 en tant que toron-âme autour duquel sont commis huit fils individuels (45).

17. Câble de renforcement selon la revendication 16, dans lequel les fils individuels sont commis autour du toron-âme avec un pas de câblage de 10 à 20 mm.

18. Câble de renforcement selon une ou plusieurs des revendications 11 à 17, enveloppés en hélice par un ou plusieurs fils d'enroulement.

19. Câble de renforcement selon la revendication 18, caractérisé par le fait que les fils d'enroulement présentent une section droite oblongue.

20. Utilisation du cordon de renforcement selon une ou plusieurs des revendications 1 à 10 pour réaliser des pneumatiques de véhicules, des tuyaux, des bandes transporteuses ou des courroies de transmission.

21. Utilisation du cordon de renforcement selon une ou plusieurs des revendications 1 à 10 dans la carcasse de pneumatiques de véhicules de tourisme.

22. Utilisation des câbles de renforcement selon une ou plusieurs des revendications 11 à 19 pour réaliser des pneumatiques de véhicules utilitaires, engins de terrassement ou tracteurs.

23. Utilisation des cordons de renforcement selon une ou plusieurs des revendications 11 à 19, dans la carcasse de pneumatiques de véhicules utilitaires, engins de terrassement ou tracteurs.

24. Pneumatique caractérisé par le fait qu'il comprend des cordons de renforcement selon une ou plusieurs des revendications 1 à 10 et/ou des câbles de renforcement selon une ou plusieurs des revendications 11 à 19.

EP 0 125 518 B1

Fig.1

Fig.2

Kraft

18   19   20

1   2   3   4   5   % Dehnung

*Fig.3*

Kraft

21   22   23

1   2   3   4 % Dehnung

*Fig.4*

2

Fig. 5

Fig. 6

EP 0 125 518 B1

Fig.7